# EUROPÄISCHE PATENTSCHRIFT

(11) **EP 3 909 826 B1**
(45) Veröffentlichungstag und Bekanntmachung des Hinweises auf die Patenterteilung: **06.12.2023**
(21) Anmeldenummer: 21170973.8
(22) Anmeldetag: 28.04.2021
(51) Int. Cl.: B61D 17/10, B62D 25/20, B62D 29/04, B62D 31/02

(54) **INTEGRALE FUSSBODENANORDNUNG FÜR SCHIENENFAHRZEUGE**
INTEGRAL FLOOR ASSEMBLY FOR RAILWAY VEHICLES
AMÉNAGEMENT INTÉGRAL DE PLANCHER POUR VÉHICULES FERROVIAIRES

(30) Priorität: 15.05.2020 DE 102020113308
(43) Veröffentlichungstag der Anmeldung: 17.11.2021
(73) Patentinhaber: Elbe Flugzeugwerke GmbH, 01109 Dresden (DE)
(72) Erfinder: Dunkel, Albrecht, 01109 Dresden (DE); Wittig, Matthias, 01109 Dresden (DE); Nitsche, Steffen, 01109 Dresden (DE); Rosenbaum, Lars, 01109 Dresden (DE)
(74) Vertreter: LKGLOBAL Lorenz & Kopf Patentanwalt Attorney at Law PartG mbB

(56) Entgegenhaltungen:
- EP-A1- 1 942 039
- EP-A1- 3 081 449
- WO-A1-99/48458
- WO-A1-2021/146525
- CA-A1- 2 345 298
- CN-A- 109 178 009
- CN-A- 110 481 584
- CN-B- 107 351 852

## Beschreibung

### TECHNISCHES GEBIET

Die vorliegende Offenbarung bezieht sich auf Fußbodenanordnungen für Schienenfahrzeuge wie Züge oder Straßenbahnen. Insbesondere bezieht sich die Offenbarung auf Fußbodenanordnungen, die als Ganzes vormontiert und dann in ein Schienenfahrzeug eingebaut werden. Weiterhin betrifft die Offenbarung ein Fahrzeug mit einer Fußbodenanordnung, sowie ein Verfahren zum Herstellen einer offenbarten Fußbodenanordnung.

### TECHNISCHER HINTERGRUND

Die Böden von Schienenfahrzeugen wie Zügen oder Straßenbahnen sind häufig mit Fußbodenaufbauten versehen. Diese Aufbauten dienen zum Einen dazu, die Fahrwerkskomponenten zu verkleiden und eine Möglichkeit zu schaffen, Innenausstattungen wie Sitze anzubringen. Zum Anderen soll damit eine ebene Trittfläche in den Gängen der Schienenfahrzeuge geschaffen werden. Um eine ausreichende Stabilität zu schaffen, sind die Verkleidungskomponenten über den Fahrwerkskomponenten oftmals von unten durch Metallstrukturen gestützt.

Die EP 1 942 039 A1 beschreibt ein strukturelles Scherpaneel zur Bildung eines Bodenpaneels, welches zur Abstützung durch einen Fahrzeugrahmen dient. Das Scherpaneel wird durch einen Verbund aus oberen und unteren Platten und einem Kern mit einem vakuuminfundierten Harz gebildet. Das Paneel ist im Wesentlichen eben und endet an seinen Seitenkanten in einem Abschnitt, der in einer gemeinsamen Ebene liegt, und es sind Abschnitte vorgesehen, die aus der im Allgemeinen ebenen Form heraus verformt sind, um herabhängende oder erhöhte Abschnitte zu bilden. Die Struktur wird auf einer im Allgemeinen flachen Platte gebildet, die den ebenen Plattenabschnitt definiert und abnehmbare Abschnitte aufweist, um die abhängigen und erhöhten Abschnitte zu definieren. Kantenstücke werden an der Platte befestigt, um die Kanten der Platte zu definieren.

Die EP 3 081 449 A1 beschreibt ein Fahrzeug mit einem Bodenrahmen, der eine Vielzahl von Schienen aufweist. Das Fahrzeug beinhaltet eine Bodenstruktur, die durch eine Vielzahl von sich in Längsrichtung erstreckenden Bodenplanken definiert ist, die sich zumindest über einen Teil der Länge der Fahrzeugkarosserie erstrecken und nebeneinander an einer Verbindungsschiene oder überlappenden Verbindung angeordnet sind, so dass sie sich gemeinsam zwischen den Seitenwänden erstrecken. Die Planken werden beispielsweise durch Pultrusion oder Vakuuminfusion aus einem Verbundwerkstoff geformt, der eine obere und eine untere Haut sowie eine dazwischenliegende Kernmaterialschicht aufweist. Die Planken können leicht in den gewünschten unterschiedlichen Längen hergestellt werden, einschließlich einer mittleren und einer seitlichen Planke, die auf der mittleren Planke stehen. Die Planken können auf jede beliebige Länge für Fahrzeuge unterschiedlicher Länge zugeschnitten werden.

Die CN 107 351 852 B beschreibt eine leichte faserverstärkte Phenol-Sandwichplatte und ihr Herstellungsverfahren. Die Sandwich-Platte umfasst zwei Deckschichten und eine Kernmaterialschicht zwischen den beiden Deckschichten, wobei die Kernmaterialschicht eine faserverstärkte Phenol-Leichtschaumschicht ist. Die Platte soll das Problem des spröden Phenolschaums lösen. Die Platte ist aus einem Phenolmaterial mit flammhemmenden Eigenschaften von innen nach außen gebildet, so dass die Platte flammhemmende Eigenschaften hat und Temperaturen von 150°C bis 180°C standhalten kann. Darüber hinaus hat die Platte eine hohe Festigkeit bei hohen Temperaturen und kann die Brandschutzanforderungen von Schienenfahrzeugen erfüllen. Sowohl der Kern als auch die Oberfläche der Platten bestehen aus leichten Materialien, die den Anforderungen von Leichtbau-Fahrzeugen gerecht werden sollen. Die Fasern im Kern sollen die Festigkeit und Steifigkeit des Phenolschaums wirksam erhöhen, und die Fasern in der Deckschicht sollen auch die Festigkeit und Steifigkeit der Phenolfolie wirksam erhöhen.

Die CA2345298A1 offenbart einen Wagenkasten mit einer Bodengrundplatte, Wandelementen und einem Dachelement, die jeweils als Leichtbauplatte mit einer Kernschicht und Decklagen ausgebildet sind, wobei die Verbindungsecken durch Druck und Hitze zusammengeschweißt sind.

Die WO2021146525A1 ist Stand der Technik gemäß Artikel 54(3) EPÜ. Diese Schrift offenbart eine Fußbodenanordnung, die eine Bodengrundplatte, ein erstes Wandelement und eine Abdeckplatte als separate Elemente aufweist. Diese sind als Leichtbauplatte geformt und können aneinander befestigt werden.

### BESCHREIBUNG

Es kann als Aufgabe der Erfindung angesehen werden, eine Fußbodenanordnung mit selbsttragenden Verkleidungskomponenten aus Verbundmaterialien über den Fahrwerkskomponenten von Fahrzeugen zu schaffen, welche nicht flächig von unten gestützt werden müssen, sondern lediglich punktuell durch voneinander beabstandete Träger, die sich in einem vordefinierten Abstand voneinander befinden. Insbesondere kann es als erstrebenswert erachtet werden, eine Fußbodenanordnung zu schaffen, die eine geringere Masse hat und die außerhalb des Schienenfahrzeugs vollständig vormontiert werden kann.

Diese Aufgabe wird durch den Gegenstand der unabhängigen Ansprüche gelöst. Weitere Ausführungsformen ergeben sich aus den abhängigen Ansprüchen sowie aus der folgenden Beschreibung.

Gemäß einem ersten Aspekt ist eine Fußbodenanordnung für den Innenraum eines Fahrzeugs angegeben. Die Fußbodenanordnung weist eine Bodengrundplatte, ein erstes flächiges Element und eine Deckplatte auf. Die Bodengrundplatte, das erste flächige Element und die Deckplatte sind jeweils als Leichtbauplatte mit einer ersten Decklage, einer der ersten Decklage gegenüberliegenden zweiten Decklage und einer dazwischenliegenden Kernschicht ausgestaltet. Das erste flächige Element verläuft quer zu der Bodengrundplatte und ist an dieser befestigt. Die Deckplatte ist an dem ersten flächigen Element befestigt. Das erste flächige Element ist an der Bodengrundplatte unter Verwendung einer der Befestigungsarten aus der Gruppe bestehend aus Stumpfstoß, Verzahnung, Verklebung, Verschraubung befestigt. Die Deckplatte ist an dem ersten flächigen Element unter Verwendung einer der Befestigungsarten aus der Gruppe bestehend aus Stumpfstoß, Verzahnung, Verklebung, Verschraubung befestigt.

Das erste flächige Element, oder falls mehr als ein flächiges Element verwendet werden, alle flächigen Elemente können jedoch auch unter Verwendung jeder anderen geeigneten Befestigungsmethode an der Bodengrundplatte befestigt sein.

Die Befestigungsart Stumpfstoß beinhaltet jede Art von Stumpfstoß, wie beispielsweise Stumpfstöße mit eingesetzten Profilen, Stumpfstöße mit Schäftung, Stumpfstoß auf Lasche usw.

Mit Verzahnung ist insbesondere gemeint, dass Vorsprünge an dem ersten flächigen Element in dazu passende Öffnungen in der Bodengrundplatte eingeführt und befestigt werden.

Die Deckplatte kann jedoch auch mit jeder anderen geeigneten Befestigungsart an dem ersten flächigen Element, oder, falls mehr als ein flächiges Element verwendet werden, an allen flächigen Elementen befestigt sein.

Die Bodengrundplatte wird bei Montage in einem Fahrzeug an den Rohbau montiert und stellt beispielsweise einen Gang oder Flur dar, auf dem Fahrgäste durch das Fahrzeug laufen können oder an dem weitere Elemente angebracht werden können.

Das erste flächige Element verläuft quer zu der Bodengrundplatte, d.h. das erste flächige Element ist unter einem Winkel so an der Bodengrundplatte befestigt, dass es von der Bodengrundplatte absteht, d.h. nicht in der Ebene der Bodengrundplatte verläuft. Die Decklage wiederum ist an dem ersten flächigen Element ebenfalls unter einem Winkel so befestigt, dass es sich nicht in der Ebene des ersten flächigen Elements befindet. Insbesondere ist das erste flächige Element damit ein Seitenelement eines Aufbaus auf die Bodengrundplatte, und die Deckplatte definiert eine obere Fläche des Aufbaus.

Der Aufbau auf die Bodengrundplatte entspricht also im Wesentlichen einer lokalen Erhöhung der Bodengrundplatte, beispielsweise für die Montage von Sitzen. Diese Aufbauten sind in Schienenfahrzeugen unter anderem nötig und üblich, um die Teile der Antriebskomponenten im Innenraum zu verdecken und die Fußbodenanordnung an eine Kontur des Unterbaus anzupassen.

Das flächige Element zusammen mit der Deckplatte entspricht also einer lokalen Erhöhung oder einem räumlichen Vorsprung, welcher sich von der Ebene der Bodengrundplatte abhebt. Der Bereich der Bodengrundplatte, den die Deckplatte überlappt, kann entfernt werden, so dass sich durch den Vorsprung aus flächigem Element und Deckplatte ein von unten (aus Richtung der Bodengrundplatte) zugänglicher Hohlraum befindet, in welchem Komponenten des Fahrzeugantriebs oder des Fahrwerks Platz finden. Das flächige Element stellt eine Seitenfläche des Vorsprungs oder der Erhöhung dar.

Wie ersichtlich ist, kann der Aufbau auch mehr als ein flächiges Element beinhalten. Wenn mehr als ein flächiges Element als Seitenwände des Aufbaus verwendet werden, können diese beispielsweise an den Kanten, die an den mit der Bodengrundplatte in Berührung stehenden Kanten angrenzen, miteinander verbunden sein. Wenn ein einzelnes flächiges Element verwendet wird, kann das eine flächige Element jedoch auch so angepasst sein, beispielsweise durch Biegen, dass die Schnittkante mit der Bodengrundplatte seine Richtung ändert, so dass diese Schnittkante keine Gerade mehr darstellt. Mit anderen Worten kann das erste flächige Element also auch so gebogen werden, dass es mehr als eine Seitenwand des Aufbaus zur Verfügung stellt.

Die Kernschichten der Decklagen der Bodengrundplatte, des ersten flächigen Elements und der Deckplatte sind aus einem Material gebildet, das gegenüber den ersten Decklagen und den zweiten Decklagen eine deutlich kleinere Dichte aufweist. Die Kernschichten können aus Schaumkernen aus jedem geeigneten Material, wie beispielsweise PVC-Schaumstoff (Polyvinylchlorid-Schaumstoff), PET-Schaumstoff (Polyethylenterephthalat-Schaumstoff) oder jedem anderen geeigneten Schaumstoff bestehen. Es können allerdings auch andere Leichtbaustoffe, wie beispielsweise Kork, verwendet werden. Die Kernschichten können aber auch als Wabenkerne jeder Art, wie beispielsweise mit Waben aus Kunststoffen, Pappen oder anderen geeigneten Materialen mit den benötigten Eigenschaften, ausgeführt sein. Bevorzugt sind die Kernschichten jedoch als Schaumkerne mit PET-Schaumstoff ausgeführt.

Die Decklagen sind aus stabilen Materialen mit höherer Dichte im Vergleich zu der Kernschicht gebildet. Hierzu kann jedes geeignete Material wie beispielsweise Holz, Kunststoffe oder verschiedene Laminate verwendet werden. Bevorzugt sind die Decklagen aus in Phenolharz getränktem Glasfasergeflecht oder aus Kohlenstofffaser-Laminat gefertigt.

Die stabilen Decklagen verteilen Drucklasten senkrecht zu der Flächennormale der Bodenplatte gleichmäßig auf die leichten Kernschichten, wodurch die Kernschichten in der Lage sind, die Drucklasten aufzunehmen. Außerdem werden Schublasten beim Biegen der Bodenplatten von dem leichten Material der Kernschichten gut aufgenommen. Die Decklagen hingegen widerstehen Zug- und Drucklasten in der Plattenebene. Dies führt zu ausgezeichneter Stabilität der Leichtbauplatten bei gleichzeitig geringem Gewicht. Die so gebildete Fußbodenanordnung, bzw. die Aufbauten auf der Bodengrundplatte der Fußbodenanordnung, ist selbsttragend. Die Aufbauten müssen also nicht von unten flächig gestützt werden, um den üblichen Lasten, beispielsweise durch Fahrgäste, standzuhalten, sondern lediglich punktuell durch Träger, die sich in einem bestimmten Abstand voneinander befinden.

Die Fußbodenanordnung ist eine mehrteilige Anordnung, die aus einzelnen Elementen, also der Bodengrundplatte, dem ersten flächigen Element, der Deckplatte, zusammengesetzt ist. Jeweils zwei einzelne Elemente sind entlang einer jeweiligen Verbindungskante miteinander verbunden oder aneinander befestigt. Somit können die einzelnen Elemente gesondert hergestellt und dann zu der Fußbodenanordnung zusammengesetzt werden. Dies hat den Vorteil, dass die Krümmungsverläufe oder Konturverläufe der einzelnen Elemente weniger komplex sind als die Krümmungsverläufe oder Konturverläufe der Fußbodenanordnung in ihrer Gesamtheit, was den Herstellungsvorgang der einzelnen Elemente im Vergleich zu der Herstellung der Fußbodenanordnung in einem Stück vereinfacht.

Gemäß einer Ausführungsform besteht die Kernschicht jeder der Leichtbauplatten aus Polyethylenterephthalat-Schaum, auch als PET-Schaum bekannt.

PET-Schaum weist eine hohe mechanische Festigkeit auf und ist deshalb gut geeignet, um Drucklasten aufzunehmen. Die Anforderungen an den Brandschutz in Schienenfahrzeugen werden durch PET-Schaum ebenfalls erfüllt. Zudem weist PET-Schaum eine hohe Schubfestigkeit und Schubbruchdehnung auf und ist leicht, weshalb er ideal für den Einsatz in Transportmitteln wie Schienenfahrzeugen geeignet ist.

Gemäß einer weiteren Ausführungsform ist die Kernschicht jeder der Leichtbauplatten ein Wabenkern.

Leichtbauplatten können mit Wabenkernen ausgestattet sein, die eine aus verschiedenen Kunststoffen, Pappen oder anderen geeigneten Materialien aufgebaute Wabenstruktur in der Kernschicht beinhalten. Die Wabenkerne sind so geformt, um eine maximale Stabilität bei gleichzeitig geringem Gewicht zu erhalten. Leichtbauplatten mit Wabenkernen in verschiedenen Ausführungen sind aus dem Stand der Technik wohl bekannt. So kann die Stabilität von Wabenkernplatten beispielsweise lokal verstärkt werden, indem die Wabenkerne an besonders belasteten Stellen beispielsweise mit Blähglas, Blähton oder anderen geeigneten Füllstoffen aufgefüllt werden.

Gemäß einer weiteren Ausführungsform weist das erste flächige Element mindestens einen Radius auf, um den das erste flächige Element gebogen ist, um die Richtung des Verlaufs des ersten flächigen Elements zu ändern. Das erste flächige Element kann jedoch auch aus mehreren einzelnen zusammengesetzten Elementen aufgebaut sein, d.h. aus Einzelelementen, die zu einem gemeinsamen Element so zusammengesetzt sind, um die gewünschte Form zu bilden. Mit anderen Worten muss das erste flächige Element also nicht aus einem Stück gefertigt sein.

Radius meint hier einen Biegeradius. Das erste flächige Element ist also an mindestens einer Stelle lokal gebogen oder gekrümmt, so dass das erste flächige Element seine Richtung ändert. Das erste flächige Element ist in Teilbereichen vor und hinter den gebogenen Abschnitten flächig. Die Erstreckungsrichtung des ersten flächigen Elements ändert sich aber an den gebogenen Abschnitten, d.h. das erste flächige Element ist an den gebogenen Abschnitten nicht eben, sondern gekrümmt. Dadurch ist es möglich, mit nur einer seitlichen Komponente des Aufbaus einen geschlossenen Bereich abzudecken.

Gemäß einer weiteren Ausführungsform ist das erste flächige Element senkrecht auf der Bodengrundplatte befestigt.

Das erste flächige Element steht also in einem rechten Winkel auf der Bodengrundplatte und ist an dieser befestigt, d.h. die erweiterte Ebene des ersten flächigen Elements schneidet die Ebene der Bodengrundplatte unter einem rechten Winkel. Insbesondere bildet jeder flächige Teilabschnitt des ersten flächigen Elements einen rechten Winkel mit der Bodengrundplatte, wenn das erste flächige Element mindestens einen gebogenen Abschnitt aufweist.

Wenn mehr als ein flächiges Element verwendet werden, kann jedes der flächigen Elemente senkrecht auf der Bodengrundplatte befestigt sein. Es können aber auch nur einzelne der flächigen Elemente senkrecht auf der Bodengrundplatte befestigt sein.

Gemäß einer weiteren Ausführungsform ist die Deckplatte senkrecht auf dem ersten flächigen Element befestigt.

Die erweiterte Ebene der Deckplatte schneidet also die erweiterte Ebene des ersten flächigen Elements ebenfalls unter einem rechten Winkel. In Ausführungen, in denen das erste flächige Element senkrecht auf der Bodengrundplatte befestigt ist, bedeutet dies insbesondere, dass die Deckplatte parallel zu der Bodengrundplatte ist, es sei denn, die Bodengrundplatte ist selbst nicht eben. Der Aufbau auf der Bodengrundplatte bildet also eine Stufe oder Erhöhung auf der Bodengrundplatte.

Gemäß einem weiteren Aspekt ist ein Verfahren zum Herstellen einer Fußbodenanordnung für den Innenraum eines Fahrzeugs angegeben. Die Fußbodenanordnung beinhaltet eine Bodengrundplatte, ein erstes flächiges Element und eine Deckplatte. Die Bodengrundplatte, das erste flächige Element und die Deckplatte sind jeweils als Leichtbauplatte mit einer ersten Decklage, einer der ersten Decklage gegenüberliegenden zweiten Decklage und einer dazwischenliegenden Kernschicht ausgestaltet. Das Verfahren beginnt mit dem Bereitstellen der Bodengrundplatte, des ersten flächigen Elements und der Deckplatte. Das erste flächige Element wird im nächsten Schritt unter einem von Null verschiedenen Winkel unter Verwendung einer der Befestigungsarten aus der Gruppe bestehend aus Stumpfstoß, Verzahnung, Verklebung, Verschraubung an der Bodengrundplatte befestigt. Im darauffolgenden Schritt wird die Deckplatte unter einem von Null verschiedenen Winkel unter Verwendung einer der Befestigungsarten aus der Gruppe bestehend aus Stumpfstoß, Verzahnung, Verklebung, Verschraubung an dem ersten flächigen Element befestigt.

Abschließend wir ein Bereich der Bodengrundplatte, der mit einer senkrechten Projektion der Deckplatte auf die Bodengrundplatte überlappt, entfernt.

Die Bodengrundplatte, das erste flächige Element und die Deckplatte können gemäß irgendeiner der weiter oben beschriebenen Ausführungsformen ausgestaltet sein. Bevorzugt sind die Bodengrundplatte, das erste flächige Element und die Deckplatte aus Leichtbauplatten mit einem Kern aus PET-Schaum gefertigt.

Das Bereitstellen der Bodengrundplatte, des ersten flächigen Elements und der Deckplatte beinhaltet auch das Präparieren der Bauteile für die vorgesehene Befestigungsart. Für eine Verzahnung beispielsweise ist es nötig, in der Bodengrundplatte Nuten einzufräsen, die die Vorsprünge oder Zähne des ersten flächigen Elements oder der mehreren flächigen Elemente aufnehmen können.

Das Entfernen eines Bereichs der Bodengrundplatte, der mit der Projektion der Deckplatte überlappt, kann beispielsweise durch Ausschneiden geschehen. Jedoch kann die Bodengrundplatte auch bereits in der benötigen Form gefertigt werden.

Die vollständige Fußbodenanordnung kann außerhalb des Fahrzeugs, für das die Fußbodenanordnung vorgesehen ist, gefertigt werden. Durch den modularen Aufbau ist ein Einsatz in einer Vielzahl von verschiedenen Fahrzeugen möglich. Die Fußbodenanordnung kann dabei Teil einer größeren Anordnung sein, die durch Fügeverfahren verbunden und dazu vorgesehen ist, den Fußboden, beispielsweise für einen Wagen im Schienenverkehr, zu bilden. Ein Wagen kann auf diese Weise mit vollständig vormontieren Fußboden- bzw. Aufbautenanordnungen versehen werden. Die Montagezeiten in dem Fahrzeug können so reduziert werden.

Gemäß einem weiteren Aspekt ist ein Fahrzeug angegeben. Das Fahrzeug weist eine Fußbodenanordnung auf und die Fußbodenanordnung weist eine Bodengrundplatte, ein erstes flächiges Element und eine Deckplatte auf. Die Bodengrundplatte, das erste flächige Element und die Deckplatte sind jeweils als Leichtbauplatte mit einer ersten Decklage, einer der ersten Decklage gegenüberliegenden zweiten Decklage und einer dazwischenliegenden Kernschicht ausgestaltet. Das erste flächige Element verläuft quer zu der Bodengrundplatte und ist an dieser befestigt. Die Deckplatte ist an dem ersten flächigen Element befestigt. Die Fußbodenanordnung ist als Fußboden in dem Fahrzeug eingebaut.

Die Fußbodenanordnung kann gemäß irgendeiner der oben beschriebenen Ausführungsformen ausgestaltet sein. Bevorzugt sind die Bodengrundplatte, das erste flächige Element und die Deckplatte als Leichtbauplatten mit einem PET-Schaumstoffkern ausgeführt.

Zusammenfassend wird durch die Erfindung also eine Fußbodenanordnung in Leichtbauweise zur Verfügung gestellt, die zu einer Massereduzierung der Fahrzeuge, insbesondere für Schienenfahrzeuge, führt. Da die komplette Fußbodenanordnung außerhalb des Fahrzeugs montiert werden kann, können die Einbauzeiten in Fahrzeuge deutlich verkürzt werden. Die stabile Struktur der Leichtbauplatten ermöglicht außerdem eine selbsttragende Konstruktion der Plattenaufbauten. Die Plattenaufbauten müssen also nicht flächig von unten gestützt werden, sondern lediglich punktuell durch Träger, die sich in einem vorgegebenen Abstand voneinander befinden. Dies reduziert den Montageaufwand weiter.

### KURZBESCHREIBUNG DER FIGUREN

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- **Fig. 1**: eine perspektivische Ansicht einer Fußbodenanordnung mit einem Plattenaufbau gemäß einer Ausführungsform.
- **Fig. 2**: eine Draufsicht auf die Fußbodenanordnung von Fig. 1 gemäß einer Ausführungsform.
- **Fig. 3**: eine perspektivische Ansicht eines Ausschnitts einer Fußbodenanordnung mit vier Plattenaufbauten gemäß einer Ausführungsform.
- **Fig. 4**: eine Profilansicht einer Leichtbauplatte gemäß einer Ausführungsform.
- **Fig. 5**: eine schematische Ansicht eines Fahrzeugs mit einer Fußbodenanordnung gemäß einer Ausführungsform.
- **Fig. 6**: ein Flussdiagramm eines Verfahrens zum Herstellen einer Fußbodenanordnung gemäß einer Ausführungsform.

### DETAILLIERTE BESCHREIBUNG VON AUSFÜHRUNGSFORMEN

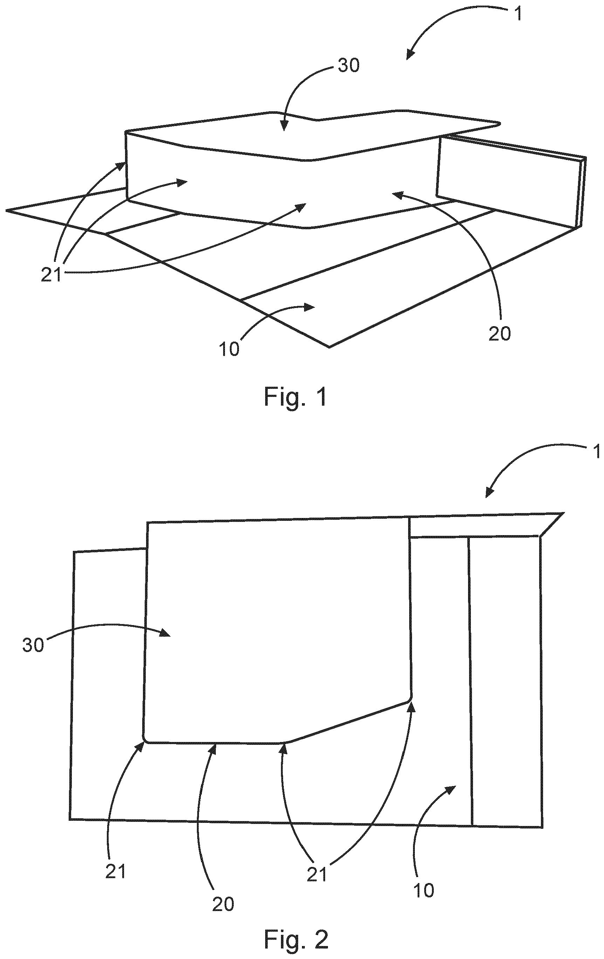

Fig. 1 zeigt eine perspektivische Ansicht eines Ausschnitts einer Fußbodenanordnung 1 außerhalb eines Fahrzeugs. Die Fußbodenanordnung 1 hat eine Bodengrundplatte 10, welche als einstückiges Verbundmaterial ausgestaltet sein kann. Auf der Bodengrundplatte 10 ist ein erstes flächiges Element 20 unter einem 90 Grad Winkel mit der Bodengrundplatte 10 verbunden. Das erste flächige Element 20 weist mehrere gebogene Abschnitte 21 (drei sichtbar) auf und ist dadurch so gebogen, dass das eine flächige Element 20 als Außenwand für den vollständigen Plattenaufbau bzw. Erhöhung fungiert. Da nur ein Element für die vollständige Seitenwand verwendet wird, sind keine Verbindungen zwischen unterschiedlichen Wandelementen bzw. Abschnitten des flächigen Elements 20 nötig. Derartige Verbindungspunkte können potentielle Schwachpunkte sein. Unter einem 90 Grad Winkel zu dem ersten flächigen Element 20 ist die Deckplatte 30 an dem ersten flächigen Element 20 befestigt. Die Verbindung des ersten flächigen Elements 20 mit der Bodengrundplatte 10 und der Deckplatte 30 mit dem ersten flächigen Element 20 kann mit bekannten Methoden, wie beispielsweise Stumpfstoß-Verbindungen oder Verzahnungen, erfolgen. Die gebogenen Abschnitte des flächigen Elements 20 können mit einem vorgegebenen Biegeradius ausgestaltet sein. Die gebogenen Abschnitte können gleichmäßig oder ungleichmäßig gebogen sein, also einem vorgegebenen Radius folgen oder einen sich verändernden Krümmungswert haben. Das flächige Element 20 kann auf einer Decklage bzw. Oberfläche der Bodengrundplatte 10 einen geschlossenen oder offenen Linienzug abbilden, wobei der Linienzug in etwa den Umrissen der Deckplatte entspricht.

Die Bodengrundplatte 10, das erste flächige Element 20 und die Deckplatte 30 sind in der dargestellten Ausführungsform jeweils als Leichtbauplatten mit PET-Schaumstoffkern und mit in Phenolkleber getränktem Glasfasergeflecht als Decklagen ausgeführt. In anderen Ausführungsformen können die Leichtbauplatten allerdings auch als Wabenkernplatten oder als Schaumkernplatte mit anderen geeigneten Kernschichten, wie oben beschrieben, ausgeführt sein.

Außerdem können in anderen Ausführungsformen das erste flächige Element 20 mit der Bodengrundplatte 10 und die Deckplatte 30 mit dem ersten flächigen Element 20 Winkel einschließen, die von 90 Grad verschieden sind.

Fig. 2 zeigt eine Draufsicht auf den Ausschnitt der Fußbodenanordnung 1 von Fig. 1. Auch hier sind die Bodengrundplatte 10 und die Deckplatte 30 sichtbar. Das erste flächige Element 20 ist nicht direkt sichtbar, aber angedeutet, weil sich das flächige Element in einer Richtung aus der Zeichenebene heraus erstreckt. Der Verlauf des ersten flächigen Elements 20 entlang der drei gebogenen Abschnitte 21 ist hier gut sichtbar.

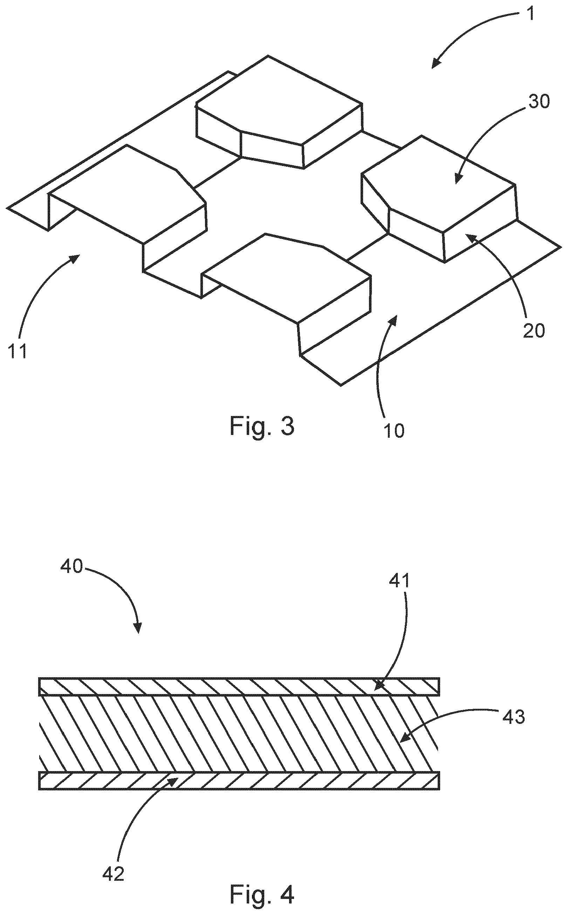

Fig. 3 zeigt eine perspektivische Ansicht eines Ausschnitts einer Fußbodenanordnung 1. Die Fußbodenanordnung weist vier Plattenaufbauten auf, die wie mit Bezug auf Fig. 1 beschrieben aufgebaut sind. Jede der Plattenaufbauten weist also auch hier wieder ein erstes flächiges Element 20 als Seitenfläche und eine Deckplatte 30 auf. Die ersten flächigen Elemente 20 sind auch hier so gebogen, dass ein einziges flächiges Element 20 jeweils die vollständige Seitenwand des jeweiligen Plattenaufbaus darstellt. Die vier dargestellten Plattenaufbauten sind alle auf einer gemeinsamen Bodengrundplatte 10, wie mit Bezug auf Fig. 1 beschrieben, befestigt. Wie hier gut sichtbar ist, weisen die vier Plattenaufbauten einen Freiraum unterhalb der Deckplatte 30 auf. Mit anderen Worten ist der mit den Projektionen der Deckplatten 30 auf die Bodengrundplatte 10 überlappende Bereich der Bodengrundplatte 10 aus der Bodengrundplatte 10 ausgeschnitten.

Fig. 4 zeigt eine Profilansicht bzw. seitliche Schnittansicht einer Leichtbauplatte 40, die für eine Fußbodenanordnung gemäß einer Ausführungsform verwendet wird. Die Leichtbauplatte 40 hat eine erste Decklage 41 und eine zweite Decklage 42. Zwischen der ersten Decklage 41 und zweiten Decklage 42 ist eine Kernschicht 43 angeordnet. Die Kernschicht 43 ist als PET-Schaumkern ausgestaltet. In anderen Ausführungsformen kann die Kernschicht 43 jedoch auch, wie weiter oben beschrieben, aus anderen geeigneten Materialen bestehen oder auch als Wabenkern ausgeführt sein. Die erste Decklage 41 und die zweite Decklage 42 sind aus in Phenolkleber getränktem Glasfasergeflecht oder aus Kohlenstofffaser-Laminat gefertigt. Die Decklagen 41, 42 können aber auch aus allen anderen geeigneten Materialien bestehen.

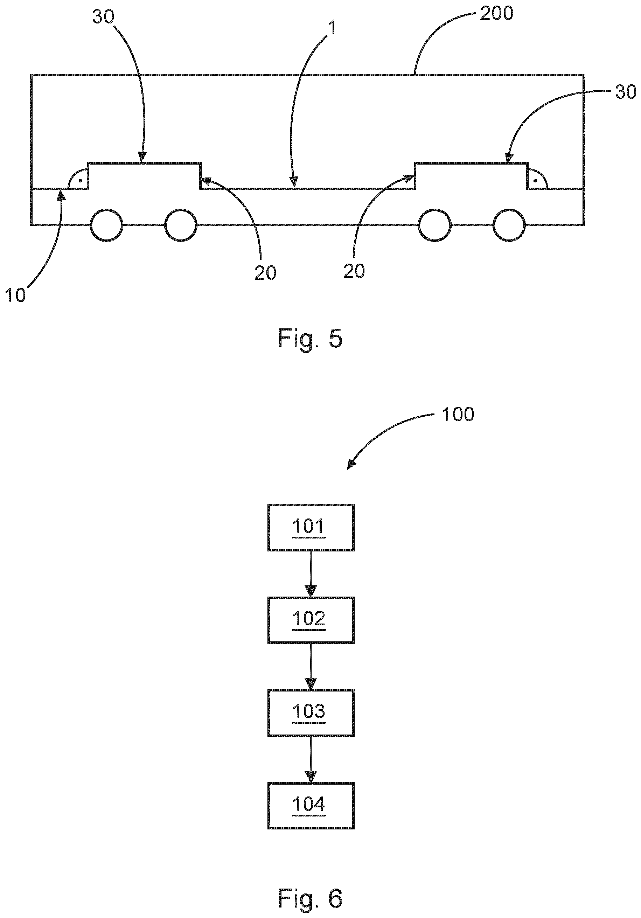

Fig. 5 ist eine schematische Ansicht eines Fahrzeugs 200 mit einer Fußbodenanordnung 1. Das dargestellte Fahrzeug weist zwei Plattenaufbauten auf, die sich über den Fahrwerkskomponenten des Fahrzeugs 200 befinden und die sich von der Bodengrundplatte 10 nach oben erstrecken. Die Plattenaufbauten weisen jeweils ein erstes flächiges Element 20 als Seitenwand und eine Deckplatte 30 auf. Die ersten flächigen Elemente sind gemäß einer Ausführungsform unter einem rechten Winkel mit der Bodengrundplatte 10 verbunden. Die Plattenaufbauten sind aus Leichtbauplatten aufgebaut und sind selbsttragend, ohne zusätzliche Stützung von unten.

Fig. 6 ist ein Flussdiagramm eines beispielhaften Verfahrens 100 zum Herstellen einer Fußbodenanordnung 1 gemäß der vorliegenden Offenbarung. In Schritt 101 werden eine Bodengrundplatte 10, ein erstes flächiges Element 20 und eine Deckplatte 30 bereitgestellt. Die Bodengrundplatte 10, das erste flächige Element 20 und die Deckplatte 30 sind als Leichtbauplatte gemäß irgendeiner der oben beschriebenen Ausführungsformen gefertigt.

In Schritt 102 wird das erste flächige Element 20 unter einem von Null verschiedenen Winkel an der Bodengrundplatte 10 befestigt. Das Befestigen kann mit irgendeiner geeigneten Befestigungsart, wie beispielsweise Stumpfstoß, Verzahnung, Verklebung oder Verschraubung, durchgeführt werden.

In Schritt 103 wird die Deckplatte 30 unter einem von Null verschiedenen Winkel an dem ersten flächigen Element 20 befestigt. Auch diese Befestigung kann analog zu der Befestigung des ersten flächigen Elements 20 an der Bodengrundplatte 10 mit irgendeiner geeigneten Befestigungsart erfolgen.

Im abschließenden Schritt 104 wird ein Bereich der Bodengrundplatte 10, der mit einer Projektion der Deckplatte 30 auf die Bodengrundplatte 10 überlappt, entfernt. Ergänzend ist darauf hinzuweisen, dass "umfassend" oder "aufweisend" keine anderen Elemente oder Schritte ausschließt und "eine" oder "ein" keine Vielzahl ausschließt. Bezugszeichen in den Ansprüchen sind nicht als Einschränkung anzusehen.

### BEZUGSZEICHENLISTE

- 1: Fußbodenanordnung
- 10: Bodengrundplatte
- 11: Freiraum
- 20: erstes flächiges Element
- 21: Radien
- 30: Deckplatte
- 40: Leichtbauplatte
- 41: erste Decklage
- 42: zweite Decklage
- 43: Kernschicht

- 100: Verfahren
- 101: Bereitstellen von Bauteilen
- 102: Befestigen des ersten flächigen Elements
- 103: Befestigen der Deckplatte
- 104: Entfernen eines Überlappbereichs der Bodengrundplatte

- 200: Fahrzeug
- 210: Fahrzeuginnenraum

## Patentansprüche

1. Fußbodenanordnung (1) für den Innenraum (210) eines Fahrzeugs (200), aufweisend:
eine Bodengrundplatte (10);
ein erstes flächiges Element (20); und
eine Deckplatte (30); wobei:
die Bodengrundplatte (10), das erste flächige Element (20) und die Deckplatte (30) jeweils als Leichtbauplatte (40) mit einer ersten Decklage (41), einer der ersten Decklage (41) gegenüberliegenden zweiten Decklage (42) und einer dazwischenliegenden Kernschicht (43) ausgestaltet sind;
das erste flächige Element (20) quer zu der Bodengrundplatte (10) verläuft und an dieser befestigt ist;
**dadurch gekennzeichnet, dass**
die Deckplatte (30) an dem ersten flächigen Element (20) befestigt ist;
das erste flächige Element (20) an der Bodengrundplatte (10) unter Verwendung einer der Befestigungsarten aus der Gruppe bestehend aus Stumpfstoß, Verzahnung, Verklebung, Verschraubung befestigt ist; und
die Deckplatte (30) an dem ersten flächigen Element (20) unter Verwendung einer der Befestigungsarten aus der Gruppe bestehend aus Stumpfstoß, Verzahnung, Verklebung, Verschraubung befestigt ist.

2. Fußbodenanordnung (1) nach Anspruch 1, wobei die Kernschicht (43) jeder Leichtbauplatte (40) aus Polyethylenterephthalat-Schaum, PET-Schaum, besteht.

3. Fußbodenanordnung (1) nach Anspruch 1, wobei die Kernschicht (43) jeder Leichtbauplatte (40) ein Wabenkern ist.

4. Fußbodenanordnung (1) nach einem der vorhergehenden Ansprüche, wobei das erste flächige Element (20) mindestens einen Radius (21) aufweist, um den das erste flächige Element gebogen ist, um die Richtung des Verlaufs des ersten flächigen Elements (20) zu ändern.

5. Fußbodenanordnung (1) nach einem der vorhergehenden Ansprüche, wobei das erste flächige Element (20) senkrecht auf der Bodengrundplatte (10) befestigt ist.

6. Fußbodenanordnung (1) nach einem der vorhergehenden Ansprüche, wobei die Deckplatte (30) senkrecht auf dem ersten flächigen Element (20) befestigt ist.

7. Verfahren (100) zum Herstellen einer Fußbodenanordnung (1) für den Innenraum (210) eines Fahrzeugs (200), wobei die Fußbodenanordnung beinhaltet:
eine Bodengrundplatte (10);
ein erstes flächiges Element (20); und
eine Deckplatte (30); wobei:
die Bodengrundplatte (10), das erste flächige Element (20) und die Deckplatte (30) jeweils als Leichtbauplatte (40) mit einer ersten Decklage (41), einer der ersten Decklage (41) gegenüberliegenden zweiten Decklage (42) und einer dazwischenliegenden Kernschicht (43) ausgestaltet sind, wobei das Verfahren (100) die folgenden Schritte umfasst:
Bereitstellen (101) der Bodengrundplatte (10), des ersten flächigen Elements (20) und der Deckplatte (30);
Befestigen (102) des ersten flächigen Elements (20) an der Bodengrundplatte (10) unter einem von Null verschiedenen Winkel unter Verwendung einer der Befestigungsarten aus der Gruppe bestehend aus Stumpfstoß, Verzahnung, Verklebung, Verschraubung;
Befestigen (103) der Deckplatte (30) an dem ersten flächigen Element (20) unter einem von Null verschiedenen Winkel unter Verwendung einer der Befestigungsarten aus der Gruppe bestehend aus Stumpfstoß, Verzahnung, Verklebung, Verschraubung;
Entfernen (104) eines Bereichs der Bodengrundplatte (10), der mit einer Projektion der Deckplatte (30) auf die Bodengrundplatte (10) überlappt.

8. Fahrzeug (200), aufweisend:
eine Fußbodenanordnung (1) nach einem der Ansprüche 1 bis 6;
wobei die Fußbodenanordnung (1) als Fußboden in dem Fahrzeug (200) eingebaut ist.

## Claims

1. Floor arrangement (1) for the interior (210) of a vehicle (200), comprising:
a bottom base plate (10);
a first planar element (20); and
a cover plate (30); wherein:
the bottom base plate (10), the first planar element (20) and the cover plate (30) are each designed as a lightweight panel (40) with a first cover layer (41), a second cover layer (42) opposite the first cover layer (41), and an intermediate core layer (43);
the first planar element (20) extends transversely to the bottom base plate (10) and is attached thereto;
**characterised in that**
the cover plate (30) is attached to the first planar element (20);
the first planar element (20) is attached to the bottom base plate (10) using one of the attachment methods selected from the group consisting of butt joint, interlocking, bonding, bolting; and
the cover plate (30) is attached to the first planar element (20) using one of the attachment methods from the group consisting of butt joint, interlocking, bonding, screwing.

2. Floor arrangement (1) according to claim 1, wherein the core layer (43) of each lightweight panel (40) consists of polyethylene terephthalate foam, PET foam.

3. Floor arrangement (1) according to claim 1, wherein the core layer (43) of each lightweight panel (40) is a honeycomb core.

4. Floor arrangement (1) according to any one of the preceding claims, wherein the first planar element (20) has at least one radius (21) about which the first planar element is bent to change the direction of extension of the first planar element (20).

5. Floor arrangement (1) according to any one of the preceding claims, wherein the first planar element (20) is vertically fixed to the bottom base plate (10).

6. Floor arrangement (1) according to any one of the preceding claims, wherein the cover plate (30) is perpendicularly mounted on the first planar element (20).

7. A method (100) of manufacturing a floor arrangement (1) for the interior (210) of a vehicle (200), the floor assembly comprising:
a bottom base plate (10);
a first planar element (20); and
a cover plate (30); wherein:
the bottom base plate (10), the first planar element (20) and the cover plate (30) are each designed as a lightweight panel (40) with a first cover layer (41), a second cover layer (42) opposite the first cover layer (41), and an intermediate core layer (43), the method (100) comprising the following steps:
providing (101) the bottom base plate (10), the first planar element (20) and the cover plate (30);
attaching (102) the first planar element (20) to the bottom base plate (10) at a non-zero angle using one of the attachment methods selected from the group consisting of butt joint, interlocking, bonding, screwing;
attaching (103) the cover plate (30) to the first planar element (20) at a non-zero angle using one of the attachment methods selected from the group consisting of butt joint, interlocking, bonding, screwing;
removing (104) a portion of the bottom base plate (10) that overlaps with a projection of the cover plate (30) onto the bottom base plate (10).

8. Vehicle (200), comprising:
a floor arrangement (1) according to any one of claims 1 to 6;
wherein the floor arrangement (1) is installed as a floor in the vehicle (200).

## Revendications

1. Ensemble de plancher (1) pour l'habitacle (210) d'un véhicule (200), comprenant :
une plaque de base (10) ;
un premier élément plan (20) ; et
une plaque de recouvrement (30) ; dans lequel :
la plaque de base (10), le premier élément plan (20) et la plaque de recouvrement (30) sont respectivement conçus comme une plaque de construction légère (40) avec une première couche de recouvrement (41), une deuxième couche de recouvrement (42) opposée à la première couche de recouvrement (41) et une couche centrale (43) située entre les deux ;
le premier élément plan (20) s'étend transversalement à la plaque de base (10) et est fixé à celle-ci ;
**caractérisé en ce que**
la plaque de recouvrement (30) est fixée au premier élément plan (20) ;
le premier élément plan (20) est fixé à la plaque de base (10) en utilisant l'un des modes de fixation du groupe constitué par un joint bout à bout, une denture, un collage, un vissage ; et
la plaque de recouvrement (30) est fixée au premier élément plan (20) en utilisant l'un des modes de fixation du groupe constitué par le joint bout à bout, une denture, un collage, un vissage.

2. Ensemble de plancher (1) selon la revendication 1, dans lequel la couche centrale (43) de chaque plaque de construction légère (40) est constituée de mousse de polyéthylène téréphtalate, mousse PET.

3. Ensemble de plancher (1) selon la revendication 1, dans lequel la couche centrale (43) de chaque plaque de construction légère (40) est une âme en nid d'abeilles.

4. Ensemble de plancher (1) selon l'une quelconque des revendications précédentes, dans lequel le premier élément plan (20) présente au moins un rayon (21) autour duquel le premier élément plan est courbé pour modifier la direction du tracé du premier élément plan (20).

5. Ensemble de plancher (1) selon l'une quelconque des revendications précédentes, dans lequel le premier élément plan (20) est fixé verticalement sur la plaque de base (10).

6. Ensemble de plancher (1) selon l'une quelconque des revendications précédentes, dans lequel la plaque de recouvrement (30) est fixée verticalement sur le premier élément plan (20).

7. Procédé (100) de fabrication d'un ensemble de plancher (1) pour l'habitacle (210) d'un véhicule (200), l'ensemble de plancher comprenant :
une plaque de base (10) ;
un premier élément plan (20) ; et
une plaque de recouvrement (30) ; dans lequel :
la plaque de base (10), le premier élément plan (20) et la plaque de recouvrement (30) sont respectivement conçus comme une plaque de construction légère (40) avec une première couche de recouvrement (41), une deuxième couche de recouvrement (42) opposée à la première couche de recouvrement (41) et une couche centrale (43) située entre les deux, le procédé (100) comprenant les étapes suivantes :
fournir (101) la plaque de base (10), le premier élément plan (20) et la plaque de recouvrement (30) ;
fixer (102) le premier élément plan (20) à la plaque de base (10) sous un angle non nul en utilisant l'un des modes de fixation choisis dans le groupe constitué par un joint bout à bout, une denture, un collage, un vissage ;
fixer (103) la plaque de recouvrement (30) à le premier élément plan (20) sous un angle non nul en utilisant l'un des modes de fixation choisis dans le groupe constitué par un joint bout à bout, une denture, un collage, un vissage ;
enlever (104) une zone de la plaque de base (10) qui chevauche une projection de la plaque de recouvrement (30) sur la plaque de base (10).

8. Véhicule (200), comprenant
un ensemble de plancher (1) selon l'une quelconque des revendications 1 à 6 ; dans lequel l'ensemble de plancher (1) est installé en tant que plancher dans le véhicule (200).
